# EUROPÄISCHE PATENTSCHRIFT

(11) **EP 1 005 764 B1**
(45) Veröffentlichungstag und Bekanntmachung des Hinweises auf die Patenterteilung: **20.10.2004**
(21) Anmeldenummer: 98951163.9
(22) Anmeldetag: 18.08.1998
(51) Int. Cl.: H04Q 7/22, H04M 15/00

(54) **MOBIL-KOMMUNIKATIONSSYSTEM ZUR VERGEBÜHRUNG VON ANRUFEN UND MOBILSTATION**
MOBILE COMMUNICATIONS SYSTEM FOR PRICING CALLS AND MOBILE STATION
SYSTEME DE COMMUNICATION MOBILE POUR LA TARIFICATION D'APPELS ET STATION MOBILE ASSOCIEE

(30) Priorität: 19.08.1997 DE 19735950
(43) Veröffentlichungstag der Anmeldung: 07.06.2000
(73) Patentinhaber: SIEMENS AKTIENGESELLSCHAFT, 80333 München (DE)
(72) Erfinder: KUNDORF, Andreas, D-13088 Berlin (DE)
(86) Internationale Anmeldenummer: PCT/DE1998/002401
(87) Internationale Veröffentlichungsnummer: WO 1999/009763

(56) Entgegenhaltungen:
- EP-A- 0 734 144
- WO-A-97/23081
- DE-A- 19 608 419
- US-A- 5 509 056

## Beschreibung

Die Erfindung betrifft ein Mobil-Kommunikationssystem zur Vergebührung von Anrufen in einem Mobilfunknetz mit einer aus Funkzellen aufgebauten zellularen Netzstruktur gemäß dem Oberbegriff des Patentanspruchs 1 sowie eine Mobilstation gemäß dem Oberbegriff des Patentanspruchs 17.

Bekanntlich haben Mobilfunknetze, wie beispielsweise die nach dem GSM-Standard (Global System for Mobile Communication), eine zellulare Netzstruktur, bestehend aus einer Mehrzahl von Funkzellen als kleinste Funkversorgungsbereiche. Dabei können mehrere Funkzellen zu Aufenthaltsgebieten zusammengefasst sein, deren Größe vom Netzbetreiber abhängig von den durch Verkehrsdichte und -fluss, Bevölkerungsdichte und Teilnehmermobilität gestellten Anforderungen auch unterschiedlich festlegbar ist. Der Netzbetreiber gibt eine Funknetzplanung vor, die Struktur, Anordnung und Anzahl der Funkzellen und Aufenthaltsgebiete enthält. Des weiteren ist bekannt, dass ein Mobilfunknetz mit zellularer Netzstruktur funktechnische Einrichtungen zum Senden/ Empfangen von Signalisierungs- und/oder Nutzinformationen zu/ von den Mobilstationen sowie vermittlungstechnische Einrichtungen zum Durchschalten von Signalisierungs- und/oder Nutzverbindungen aufweist. Speichereinrichtungen im Mobilfunknetz enthalten die Teilnehmerdaten der registrierten mobilen Teilnehmer, die Anrufe absetzen und entgegennehmen wollen. Zur Ermittlung der jeweiligen Anrufgebühr für einen Anruf ist zumindest eine Vergebührungseinrichtung im Mobilfunknetz angeordnet, die anrufbezogene Datensätze - beispielsweise des A-Teilnehmers (anrufender Teilnehmer) und des B-Teilnehmers (angerufener Teilnehmer) - aufzeichnet und abhängig von diesen Datensätzen die Anrufgebühr berechnet. Im Zeichen der wachsenden Anzahl deregulierter Kommunikationsnetze, einer höheren Mobilitätsnachfrage und sinkenden Preisen für Telekommunikationsleistungen sowie hohen Kosten zur Bereitstellung der letzten Meile für einen Festnetzanschluss eines leitungsgebundenen Teilnehmers ist es wünschenswert, auch in einem Mobil-Kommunikationssystem eine für den mobilen Teilnehmer flexiblere Gebührenstruktur zur Vergebührung der Anrufe zu haben. Dies würde eine höhere Bereitschaft der leitungsgebundenen Teilnehmer, die in der Regel geringere Gebühren gegenüber den mobilen Teilnehmern haben, zum Wechsel in die mobile Kommunikation nach sich ziehen.

Aus der internationalen Patentanmeldung WO 97/23081 sind ein Verfahren und ein System zur Kontrolle von Anrufen sowohl für Teilnehmer eines Festnetzes als auch für Teilnehmer eines Mobilfunknetzes ausschließlich durch Kopplung mit Einrichtungen (z.B. SSP, SCP, SDF) eines Intelligenten Netzes (IN) bekannt. Die Nutzung von IN-Einrichtungen ermöglicht es dem bekannten System, ohne substantielle Änderungen der Telekommunikationsnetze eine spezielle Vergebührung für eine begrenzte Anzahl von Netzteilnehmern wirksam werden zu lassen. Somit ist das Intelligente Netz unabdingbare Voraussetzung für die Durchführbarkeit der in D1 beschriebenen Lösung. Das Intelligente Netz speichert - außerhalb des Mobilfunknetzes (MCN) und damit nicht in einer Speichereinrichtung des Mobilfunknetzes - mehrere Nummern-Paare, denen jeweils eine gemeinsame Anrufnummer (common call number) eindeutig zugeordnet ist. Als Speichereinrichtung zur Aufnahme dieser Nummern ist eine teilnehmerspezifische IN-Speichereinrichtung vorgesehen.

Es ist Aufgabe der vorliegenden Erfindung, ein Mobil-Kommunikationssystem zu schaffen, durch das die Vergebührung von Anrufen im Mobilfunknetz besser an die Bedürfnisse und Wünsche der mobilen Teilnehmer in Bezug auf eine flexiblere Gebührenstruktur angepasst werden kann. Darüber hinaus ist eine Mobilstation anzugeben, die die flexiblere Gebührenstruktur unterstützt.

Diese Aufgabe wird durch die Merkmale des Patentanspruchs 1 hinsichtlich des Mobil-Kommunikationssystems gelöst. Weiterbildungen der Erfindung sind in den Unteransprüchen angegeben. Eine Mobilstation zur Unterstützung der erfindungsgemäßen Vergebührung ist im Patentanspruch 17 angegeben.

Gemäß dem Gegenstand der Erfindung werden für die mobilen Teilnehmer jeweils eine oder mehrere Vorzugs-Rufnummern definiert und verwaltet, eine mit dem Anruf gewählte Ziel-Rufnummer, der eine Steuerinformation zur Kennzeichnung, dass es sich um eine Vorzugs-Rufnummer handelt, zugeordnet wird, mit den für den mobilen Teilnehmer definierten Vorzugs-Rufnummern verglichen und bei Identität der Ziel-Rufnummer mit einer Vorzugs-Rufnummer die Anrufgebühren von der Vergebührungseinrichtung abweichend von der üblichen Vergebührung ermittelt. Durch die teilnehmerindividuelle Festlegung von Vorzugs-Rufnummern hat grundsätzlich jeder mobile Teilnehmer die Möglichkeit, bestimmte Anrufziele auszuwählen und zu definieren, die anders vergebührt werden als die sonstigen Anrufe - z.B. durch einen günstigeren Gebührentarif. Damit erhöht sich die Flexibilität der mobilen Teilnehmer und der Netzbetreiber in Bezug auf die Tarifierung der Anrufe. Darüber hinaus bewirkt die Erfindung eine höhere Bereitschaft der Teilnehmer zum Wechsel in die mobile Kommunikation. Die Netzbetreiber und Diensteanbieter können durch die Vorzugs-Rufnummern den mobilen Teilnehmern mehr Flexibilität bei der Gebührenstruktur anbieten und damit zu einer gestaffelten Gebührenstruktur kommen.

Gemäß alternativer Weiterbildungen der Erfindung werden die Vorzugs-Rufnummern entweder mobilstationsseitig oder netzseitig gespeichert. Netzseitig kann zwischen der Speicherung der Vorzugs-Rufnummern als Teilnehmerdaten in zumindest einer Teilnehmerdatenbasis des Mobilfunknetzes und der Speicherung in zumindest einer Teilnehmerdatenbasis einer Dienstesteuerungsstelle eines Intelligenten Netzes unterschieden werden. Die mobilstationsseitige Speicherung hat den Vorteil, daß der mobile Teilnehmer selbst - z.B. über eine Teilnehmerselbsteingabe - die Vorzugs-Rufnummern verändern, hinzufügen, löschen und abrufen kann. Bei der netzseitigen Speicherung werden die Vorzugs-Rufnummern vom Betreiber des Mobilfunknetzes oder vom Betreiber des Intelligenten Netzes verwaltet und gesteuert. Auch über eine Teilnehmerselbsteingabe lassen sich die netzseitig gespeicherten Vorzugs-Rufnummern beeinflussen.

Als besonders vorteilhaft hat sich erwiesen, die Vorzugs-Rufnummern mobilstationsseitig in dem Teilnehmeridentitätsmodul (SIM) zu speichern. Dabei wird ein Speichereintrag vorzugsweise aus der Vorzugs-Rufnummer und zumindest einem zugehörigen Anrufziel gebildet.

Von Vorteil ist es auch, wenn der Speichereintrag einen Kurzcode zur Kennzeichnung der Vorzugs-Rufnummer sowie den Namen des angerufenen Teilnehmers als Anrufziel aufweist, was quasi einem Telefonbuch in der Mobilstation entspricht.

Das Mobilfunknetz wird über das Vorliegen einer Vorzugs-Rufnummer informiert, indem zusammen mit der Ziel-Rufnummer die Steuerinformation zur Kennzeichnung des Vorliegens einer Vorzugs-Rufnummer von der Mobilstation zum Mobilfunknetz signalisiert wird, das auf Grund der empfangenen Informationen eine teilnehmerindividuelle Vergebührung des Anrufs veranlaßt.

Von Vorteil für den mobilen Teilnehmer ist es, wenn Informationen, die zumindest auf die teilnehmerindividuelle Vergebührung des Anrufs hinweisen, vom Mobilfunknetz bereitgestellt, zur Mobilstation signalisiert und von der Mobilstation dem mobilen Teilnehmer angezeigt werden.

Die Vorzugs-Rufnummern können auch gemäß einer anderen Weiterbildung der Erfindung netzseitig in der Vergebührungseinrichtung gespeichert und erst bei Verknüpfung der Datensätze zum Ermitteln der Anrufgebühr das Vorliegen einer Vorzugs-Rufnummer berücksichtigt werden.

Die Mobilstation zur Unterstützung der flexiblen Vergebührung weist Mittel auf, durch die für die mobilen Teilnehmer jeweils eine oder mehrere Vorzugs-Rufnummern definiert und verwaltet, eine mit dem Anruf gewählte Ziel-Rufnummer, der eine Steuerinformation zur Kennzeichnung, dass es sich um eine Vorzugs-Rufnummer handelt, zugeordnet ist, mit den für den mobilen Teilnehmer definierten Vorzugs-Rufnummern verglichen und bei Identität der Ziel-Rufnummer mit einer Vorzugs-Rufnummer eine Information zur Kennzeichnung des Vorliegens einer Vorzugs-Rufnummer zusammen mit der Ziel-Rufnummer zum Mobilfunknetz signalisiert werden, sodaß netzseitig auf Grund der empfangenen Informationen die Anrufgebühren von der Vergebührungseinrichtung abweichend von der üblichen Vergebührung ermittelt werden.

Einzelheiten der Erfindung werden in Ausführungsbeispielen, die in der Zeichnung dargestellt sind, näher erläutert. Im einzelnen zeigen
- Figuren 1 und 2: Blockschaltbilder eines Mobil-Kommunikationssystems mit Mobilstationen und mit Netzeinrichtungen eines Mobilfunknetzes zur Vergebührung von Anrufen mobiler Teilnehmer bei Verwendung von mobilstationsseitig gespeicherten Vorzugs-Rufnummern,
- Figur 3: das Blockschaltbild des Mobil-Kommunikationssystems zur Vergebührung von Anrufen bei netzseitiger Speicherung der Vorzugs-Rufnummern in einer Teilnehmerdatenbasis,
- Figur 4: das Blockschaltbild des Mobil-Kommunikationssystems zur Vergebührung von Anrufen bei netzseitiger Speicherung der Vorzugs-Rufnummern in einer Dienstesteuerungsstelle,
- Figur 5: das Blockschaltbild des Mobil-Kommunikationssystems zur Vergebührung von Anrufen bei netzseitiger Speicherung der Vorzugs-Rufnummern in einer Nachverarbeitungseinheit der Vergebührungseinrichtung, und
- Figur 6: die Signalisierung von der Mobilstation oder dem Netzbetreiber für einen Zugriff zu den den mobilstationsseitig oder netzseitig gespeicherten Vorzugs-Rufnummern.

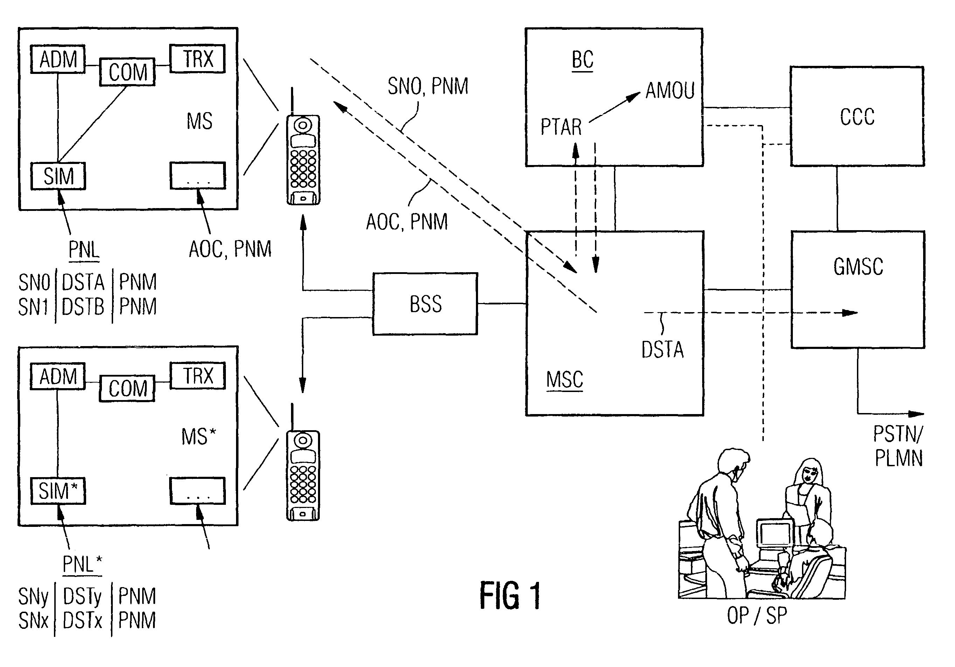

Figur 1 zeigt das Blockschaltbild eines Mobil-Kommunikationssystems mit Mobilstationen MS und MS* und Netzeinrichtungen eines Mobilfunknetzes für eine Vergebührung von Anrufen, die von den die Mobilstationen MS und MS* betätigenden mobilen Teilnehmern gesendet und empfangen werden können. Die beiden Mobilstationen MS und MS* mobiler Teilnehmer sind über eine Funkschnittstelle mit den Einrichtungen des Mobilfunknetzes drahtlos verbunden. Dabei weist das Mobilfunknetz - z.B. ein Mobilfunknetz nach dem GSM-Standard - an der Funkschnittstelle ein funktechnisches Teilsystem BSS auf, das über Basis-Sende-Empfangsstationen in den einzelnen Funkzellen des zellular strukturierten Mobilfunknetzes sowie über Basisstationssteuerungen, die mit den Empfangsstationen verbunden sind, verfügt. Die Empfangsstationen dienen zum Senden/Empfangen von Signalisierungsinformationen bzw. Nutzinformationen, die zwischen den Mobilstationen und dem Netz drahtlos über Funksignale ausgetauscht werden. Die Basisstationssteuerungen übernehmen die steuerungstechnischen Funktionen für die Funkübertragung, so beispielsweise die Zuordnung von Übertragungskanälen, in denen die Signalisierungsinformationen und /oder die Nutzinformationen enthalten sind. Grundsätzlich ist die Erfindung aber auch auf andere Mobil-Kommunikationssysteme, die abweichend vom GSM-Standard arbeiten, anwendbar.

An das funktechnische Teilsystem BSS ist ein vermittlungstechnisches Teilsystem angeschlossen, das üblicherweise mehrere vermittlungstechnische Einrichtungen - z.B. die Mobilvermittlungsstellen MSC - zum Durchschalten der Signalisierungsverbindungen und/oder der Nutzverbindungen zu/von den Mobilstationen aufweist. Im vermittlungstechnischen Teilsystem sind weiterhin Speichereinrichtungen - wie beispielsweise zumindest ein Heimatregister sowie ein oder mehrere Besucherregister - zum Speichern der Teilnehmerdaten der im Mobilfunknetz registrierten mobilen Teilnehmer angeordnet. Die Teilnehmerdaten eines mobilen Teilnehmers sind dabei in dem für ihn zuständigen Heimatregister für die Dauer seiner Registrierung im Netz permanent eingetragen, während die Teilnehmerdaten des mobilen Teilnehmers in einem Besucherregister für die Dauer seines Aufenthalts im Zuständigeitsbereich einer zugehörigen Mobilvermittlungsstelle MSC nur vorübergehend eingetragen sind. An die Mobilvermittlungsstelle MSC ist im vorliegenden Beispiel eine Zugangs-Mobilvermittlungsstelle GMSC angeschlossen, die die Verbindung an der Schnittstelle vom Mobilfunknetz zu einem anderen Kommunikationsnetz - z.B. dem öffentlichen leitungsgebundenen Fernsprechnetz PSTN oder einem anderen Mobilfunknetz PLMN - bildet. Es sei angenommen, daß die Mobilvermittlungsstelle MSC für die Anrufe, von denen die Mobilstationen MS und MS* betroffen sind, zuständig ist. Das Anrufziel (angerufener B-Teilnehmer) liege außerdem in einem anderen Netz, sodaß die Anrufverbindung von der Mobilvermittlungsstelle MSC zur Zugangs-Mobilvermittlungsstelle GMSC und von dort in das andere Netz führt.

Mit jeder Mobilvermittlungsstelle MSC ist eine Vergebührungseinrichtung BC verbunden, die anrufbezogene Datensätze des anrufenden A-Teilnehmers - hier des mobilen Teilnehmers, der die Mobilstation MS betätigt - und des angerufenen B-Teilnehmers aufzeichnet und die jeweilige Anrufgebühr durch Verknüpfung der A-seitigen und B-seitigen Datensätze (Call Data Records) unter Berücksichtigung eines bestimmten Anruftarifs ermittelt. Dabei weist die jeweilige Mobilvermittlungsstelle MSC zumindest eine Verzonungs/Vergebührungstabelle zum Bewerten der Anrufgebühren für ein online-Übertragen und Anzeigen der Gebühren an der Mobilstation MS, MS* auf uns stellt damit ein funktionales Abbild der Vergebührungseinrichtung BC in Bezug auf die online-Vergebührung dar. Mit der Vergebührungseinrichtung BC steht eine Verwaltungseinrichtung CCC (Customer Care Center) in Verbindung, die einerseits die Vergebührungseinrichtung BC verwaltet und andererseits Eingaben von einem Netzbetreiber OP oder einem Diensteanbieter SP über eine gesonderte Schnittstelle empfängt. Der Netzbetreiber OP oder Diensteanbieter SP hat auch Zugriff zur Vergebührungseinrichtung BC, um übliche wie spezielle Anruftarife implementieren, ändern oder ersetzen zu können.

In den Mobilstationen MS und MS* werden für den jeweiligen mobilen Teilnehmer eine oder mehrere Vorzugs-Rufnummern SN0, SN1 und Sny, Snx definiert und verwaltet. Sie sind vorzugsweise im Teilnehmeridentitätsmodul SIM gespeichert und können mit jeder vom A-Teilnehmer gewählten Ziel-Rufnummer des B-Teilnehmers auf Identität verglichen werden. Sinn und Zweck des Vergleichs ist das Erkennen, ob eine Vorzugs-Rufnummer vorliegt, anhand der die netzseitige Vergebührung des Anrufs abweichend von der üblichen Vergebührung erfolgt. Eine wesentliche Maßnahme des Netzes besteht beispielsweise darin, für alle Vorzugs-Rufnummern einen niedrigeren Anruftarif zur Vergebührung heranzuziehen. Ein weitere Staffelung der Tarife für einen ausgewählten Teil der Vorzugs-Rufnummern durch das Mobilfunknetz, d.h. im wesentlichen durch die Vergebührungseinrichtung BC, ist ebenfalls möglich. Der mobile Teilnehmer erhält somit die Möglichkeit, einen Satz von Ziel-Rufnummern (von B-Teilnehmern) als Vorzugs-Rufnummern festzulegen, die einer anderen, d.h. auch besonderen Gebührenstruktur netzseitig unterzogen werden. Die Verwaltung der Vorzugs-Rufnummern - Ändern, Hinzufügen, Löschen, Abfragen - kann im einfachsten Fall durch eine Teilnehmerselbsteingabe (Subscriber Controlled Input) des mobilen Teilnehmers bewirkt werden, die gegebenenfalls gebührenpflichtig ist. Auch die optische / akustische Anzeige zumindest einer Information, daß es sich um eine teilnehmerindividuelle Vergebührung handelt, und/oder der anfallenden Anrufgebühren ist gegeben, da das Mobilfunknetz entsprechende Signalisierungsinformationen zur Mobilstation laufend aussendet.

Im vorliegenden Beispiel sind in jeder Mobilstation MS und MS* jeweils zwei Einträge in einer Nummernliste PNL und PNL* (Prefered Number List) angelegt. Jeder Eintrag weist zumindest eine Vorzugs-Rufnummer und ein zugehöriges Anrufziel auf. Die Vorzugs-Rufnummer besteht im einfachsten Fall aus der Ziel-Rufnummer, der eine Kennung, daß es sich bei der Ziel-Rufnummer um eine Vorzugs-Rufnummer handelt, zugeordnet ist. Diese Kennung ist das für alle Rufnummern einheitlich verwendbare Zeichen PNM (Prefered Number Mark), das beim Definieren gesetzt und beim Löschen wieder rückgesetzt wird. Somit besteht der erste Eintrag in der Nummernliste PNL der Mobilstation MS aus der Ziel-Rufnummer SN0, dem zugehörigem Anrufziel DSTA und der Kennung PNM. Der zweite Eintrag weist die Ziel-Rufnummer SN1 mit zugehörigem Anrufziel DSTB als Vorzugs-Rufnummer aus, da ebenfalls die Kennung PNM gesetzt ist. Jeder Speichereintrag kann auch einen Kurzcode zur KennZeichnung der Vorzugs-Rufnummern SN0, SN1 sowie den Namen des angerufenen Teilnehmers als Anrufziel DSTA, DSTB enthalten, sodaß die Daten ähnlich einem Telefonbuch mobilstationsseitig abrufbar sind. In gleicher Weise existiert in der Mobilstation MS* eine Nummernliste PNL*, deren erster Eintrag die Vorzugs-Rufnummer SNy mit zugehörigem Anrufziel DSTy und Kennung PNM enthält und deren zweiter Eintrag die Vorzugs-Rufnummer SNx mit zugehörigem Anrufziel DSTx und Kennung PNM umfasst.

Es sei angenommen, daß der mobile Teilnehmer, der die Mobilstation MS bedient, den abgehenden Anruf initiiert und die Ziel-Rufnummer des angerufenen B-Teilnehmers - der ebenfalls ein mobiler Teilnehmer, aber auch ein leitungsgebundener Teilnehmer sein kann - wählt. Ergibt der Vergleich eine Übereinstimmung der gewählten Rufnummer mit einer der gespeicherten Vorzugs-Rufnummer SN0 und SN1, so erfolgt eine teilnehmerindividuelle Vergebührung des Anrufs durch die Vergebührungseinrichtung BC. Im vorliegenden Beispiel wählt der mobile Teilnehmer die Rufnummer SN0, die eine der Vorzugs-Rufnummern darstellt. Die Mobilstation MS - stellvertretend für alle Mobilstationen - weist eine Steuerungs- und Verwaltungseinheit ADM zum Definieren und Verwalten der Vorzugs-Rufnummern SN0, SN1 für die mobilen Teilnehmer auf. Darüber hinaus verfügt sie über Vergleichsmittel COM zum Vergleich der mit dem Anruf gewählten Ziel-Rufnummer mit den für den mobilen Teilnehmer definierten und aus dem SIM-Modul ausgelesenen Vorzugs-Rufnummern SN0, SN1. Dadurch, daß Identität der Ziel-Rufnummer SN0 mit einer der beiden Vorzugs-Rufnummer SN0, SN1 gegeben ist, sendet die Mobilstation MS durch ihre Empfangs/Sendeeinheit TRX die Rufnummer SN0 zusammen mit der Kennung PNM in einer Signalisierungsnachricht über das Funkteilsystem BSS zu der zuständigen Mobilvermittlungsstelle MSC aus, die an der eintreffenden Kennung PNM das Vorliegen einer Vorzugs-Rufnummer abliest. Sie signalisiert der Vergebührungseinrichtung BC, daß eine von der üblichen Art abweichende Vergebührung dieses Anrufs erfolgen soll. Die abweichende Behandlung besteht in der Berücksichtigung beispielsweise eines geringeren Gebührentarifs PTAR (Prefered Tarif) in der Vergebührungseinrichtung BC und in der Mobilvermittlungsstelle MSC - zur online-Vergebührung - , während ansonsten die Berechnung der Gebühr anhand der aufgezeichneten Datensätze bekanntermaßen durchgeführt wird.

Eine Anrufverbindung wird auf Grund der Ziel-Rufnummer, die das Anrufziel DSTA festlegt, von der Mobilvermittlungsstelle MSC zur Zugangs Mobilvermittlungsstelle GMSC aufgebaut, da es sich bei dem B-Teilnehmer um einen Teilnehmer des anderen Kommunikationsnetzes PLMN/PSTN handelt. Schließlich ergibt sich nach Ende des Anrufs eine gesamte Anrufgebühr AMOU, die dem mobilen Teilnehmer in Rechnung gestellt wird. Die Vergebührungseinrichtung BC signalisiert der Mobilvermittlungsstelle MSC bereits vorab - d.h. gegebenenfalls vor dem Zustandekommen der Verbindung oder kurze Zeit später - den gesonderten Gebührentarif PTAR oder zumindest eine Information, die einen Hinweis auf die Vorzugs-Vergebührung enthält, zurück. Von der Mobilvermittlungsstelle MSC werden Informationen AOC (Advice of Charge) bezüglich der Vergebührung über das Funkteilsystem BSS zu der Mobilstation MS fortlaufend gemeldet, die aus den eintreffenden Informationen die Gebührensumme errechnet und dem Teilnehmer vorzugsweise optisch im Display anzeigt. Eine Rücksignalisierung vom Netz zur Mobilstation, daß eine Vorzugs-Behandlung bezüglich der Vergebührung vorliegt, ist ebenfalls möglich. Dabei bietet es sich an, die Kennung PNM zur Bestätigung zurückzusenden.

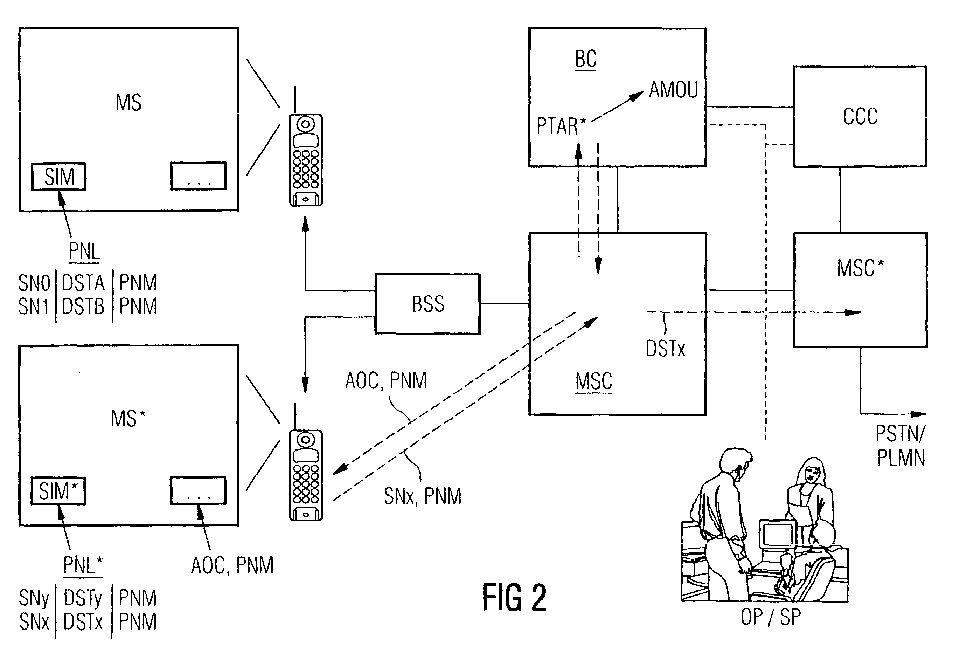

Im Unterschied zu FIG 1 zeigt die FIG 2 die Signalisierung der Informationen zwischen der Mobilstation MS* und dem Mobilfunknetz, da der Anruf von einem mobilen Teilnehmer, der die Mobilstation MS* bedient, initiiert wurde. Die Ziel-Rufnummer ist die Vorzugs-Rufnummer SNx, die mit der Kennung PNM in Richtung Netz ausgesendet wird. Die Mobilvermittlungsstelle MSC registriert die Kennung und weist die Vergebührungseinrichtung BC darauf hin, einen Vorzugs-Gebührentarif PTAR* zur Ermittlung der Anrufgebühr zu benutzen. Mit der gewählten Rufnummer ist eine Anrufverbindung zum Anrufziel DSTx aufzubauen, das im vorliegenden Beispiel zu einem mobilen B-Teilnehmer gehört und in einem Zuständigkeitsbereich einer anderen Mobilvermittlungsstelle MSC* desselben Mobilfunknetzes liegt. Eine Rücksignalisierung der Informationen AOC kann in Analogie zum Beispiel der FIG 1 ebenfalls zwischen Netz und Mobilstation MS* erfolgen, sodaß der mobile Teilnehmer über die gesonderte Tarifierung seines Anrufs informiert wird.

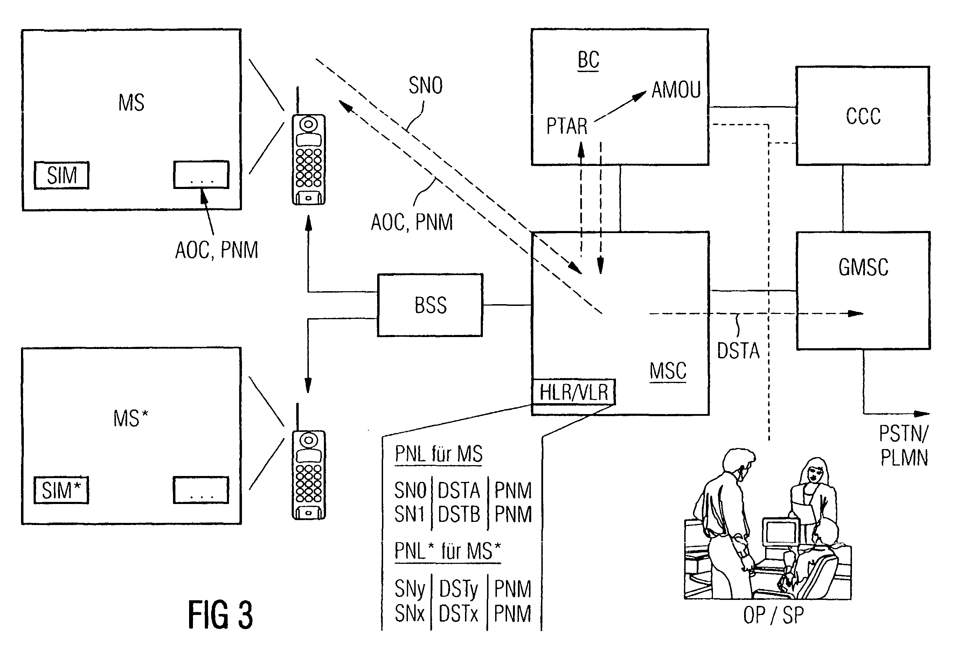

Alternativ zu den Darstellungen in den FIG 1 und 2 zeigt die FIG 3 eine Möglichkeit der netzseitigen Speicherung der Nummernlisten PNL und PNL* für die Mobilstationen MS und MS*. Der Speicherort ist eine Teilnehmerdatenbasis - vorzugsweise das Heimatregister HLR oder ein Besucherregister VLR - im Mobilfunknetz. Die Einträge für die mobilen Teilnehmer sind dieselben wie in FIG 1 und FIG 2, d.h. die Ziel-Rufnummern SN0, SN1 und SNy, SNx sind als Vorzugs-Rufnummern anhand der jeweils gesetzten Kennung PNM deklariert. Dabei kann auf die Speicherung der Kennung PNM verzichtet werden, wenn alle als Vorzugs-Rufnummern deklarierten Ziel-Rufnummern SN0, SN1 und SNy, SNx in einer eigenen Tabelle enthalten sind. Eine Speicherung der Anrufziele DSTA...DSTx, die auf die Namen der angerufenen Teilnehmer deuten, ist optional auch netzseitig möglich. Zieht man das Beispiel von FIG 1 heran, wird die über die Mobilstation MS eingegebene Ziel-Rufnummer SN0 des B-Teilnehmers zur Mobilvermittlungsstelle MSC signalisiert. Diese frägt die Teilnehmerdaten des anrufenden A-Teilnehmers auf das Vorliegen einer mit der Ziel-Rufnummer identischen Vorzugs-Rufnummer ab und empfängt entweder vom Heimatregister HLR oder vom zugehörigen Besucherregister VLR eine entsprechende Antwortnachricht. Da im Beispiel die Ziel-Rufnummer SN0 als Vorzugs-Rufnummer definiert und netzseitig gespeichert wurde, kann die Mobilvermittlungsstelle MSC die Vergebührungseinrichtung BC instruieren, den Vorzugs Gebührentarif PTAR zur Ermittlung der Anrufgebühr zu verwenden. Mit der gewählten Rufnummer wird die Anrufverbindung zum Anrufziel DSTA des leitungsgebundenen Teilnehmers aufgebaut, das im vorliegenden Beispiel im Zuständigkeitsbereich des anderen Netzes liegt. Eine Rücksignalisierung der Informationen AOC kann in Analogie zum Beispiel der FIG 1 ebenfalls zwischen Netz und Mobilstation MS erfolgen, sodaß der mobile Teilnehmer zumindest über die gesonderte Tarifierung seines Anrufs oder zusätzlich über die anfallenden Gebühren informiert wird.

Die in der oder den Teilnehmerdatenbasen netzseitig gespeicherten Nummernlisten PNL und PNL* können entweder vom mobilen Teilnehmer über die Teilnehmerselbsteingabe oder vom Netzbetreiber OP bzw. Diensteanbieter SP über eine gesonderte Schnittstelle zur Vergebührungseinrichtung BC bzw. zur Verwaltungseinrichtung CCC verwaltet und gesteuert - d.h. auch geändert, ergänzt, gelöscht oder abgefragt - werden.

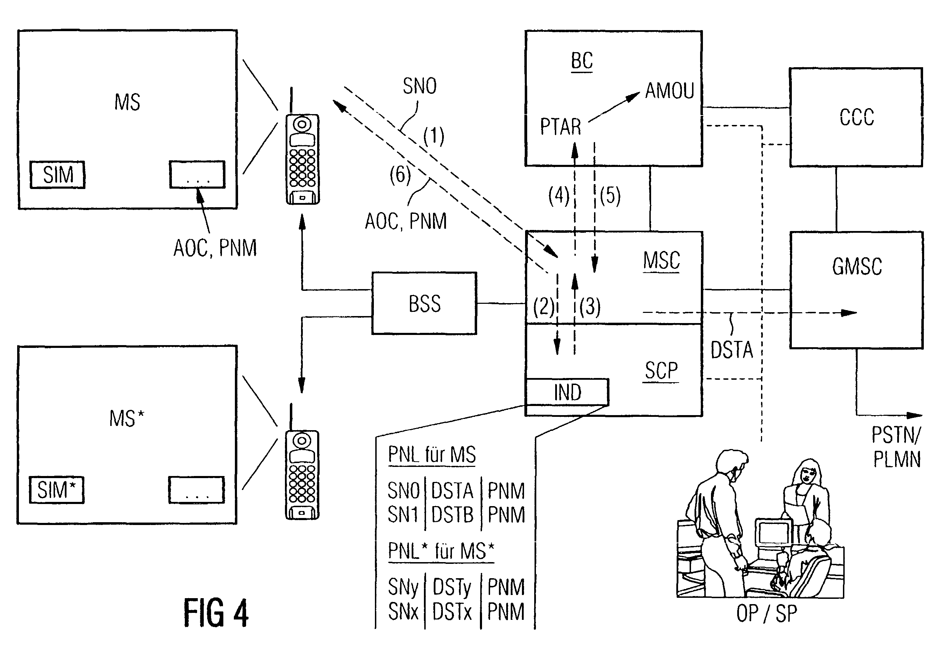

Im Unterschied zu FIG 3 zeigt die FIG 4 das Blockschaltbild eines Mobil-Kommunikationssystems, bei dem eine alternative Möglichkeit der netzseitigen Speicherung der Nummernlisten PNL und PNL* für die Mobilstationen MS und MS* in einer Dienstesteuerungsstelle SCP (Service Control Point) eines Intelligenten Netzes (IN) besteht. Damit läßt sich die flexible Gebührenstruktur durch Definition und Verwaltung der Vorzugs-Rufnummern auch unter Einbindung der IN-Funktion erreichen, die für die Ausführung intelligenter Netzfunktionen unabhängig von der Netzstruktur des Mobilfunknetzes sorgt. Der Speicherort ist eine Teilnehmerdatenbasis IND in der Dienstesteuerungsstelle SCP. Die Einträge für die mobilen Teilnehmer sind dieselben wie in FIG 3, d.h. die Ziel-Rufnummern SN0, SN1 und SNy, SNx sind als Vorzugs-Rufnummern anhand der jeweils gesetzten Kennung PNM deklariert oder als solche in einer Vorzugs-Rufnummern-Tabelle gespeichert. Eine Speicherung der Anrufziele DSTA...DSTx, die auf die Namen der angerufenen Teilnehmer deuten, ist optional auch netzseitig vorzuziehen.

Zieht man das Beispiel von FIG 3 heran, wird die über die Mobilstation MS eingegebene Ziel-Rufnummer SN0 des B-Teilnehmers zur Mobilvermittlungsstelle MSC signalisiert (1). Diese verzweigt im Anrufaufbau zur Dienstesteuerungsstelle SCP und frägt die Teilnehmerdatenbasis IND auf das Vorliegen einer mit der Ziel-Rufnummer identischen Vorzugs-Rufnummer ab (2). Dabei enthält die Dienstesteuerungsstelle SCP ein funktionales Abbild der Vergebührungseinrichtung BC in Bezug auf die online-Vergebührung des Anrufs - analog zur Beschreibung zu FIG 1 und FIG 2. Als Rückantwort empfängt die Mobilvermittlungsstelle MSC eine Nachricht, die ihr bestätigt, daß die Ziel-Rufnummer SN0 als Vorzugs-Rufnummer definiert und netzseitig gespeichert wurde (3). Daraufhin veranlaßt die Mobilvermittlungsstelle MSC, daß die Vergebührungseinrichtung BC den Vorzugs-Gebührentarif PTAR zur Ermittlung der Anrufgebühr berücksichtigt (4). Mit der empfangenen Ziel-Rufnummer SN0 wird die Anrufverbindung von der Mobilvermittlungsstelle MSC zum Anrufziel DSTA des leitungsgebundenen Teilnehmers aufgebaut, das im vorliegenden Beispiel im Zuständigkeitsbereich des anderen Netzes liegt. Die Vergebührungseinrichtung BC sendet zumindest die Informationen über den gesonderten Gebührentarif PTAR zur Mobilvermittlungsstelle MSC zurück (5). Eine Rücksignalisierung der Informationen AOC einschließlich der Indikation - z.B. bestehend aus der Kennung PNM - , daß eine Vorzugs-Behandlung vorliegt, erfolgt in Analogie zum Beispiel der FIG 3 ebenfalls zwischen Netz und Mobilstation MS, sodaß der mobile Teilnehmer zumindest über die gesonderte Tarifierung seines Anrufs oder zusätzlich über die anfallenden Gebühren informiert wird.

Die in der Teilnehmerdatenbasis IND des intelligenten Netzknotens SCP netzseitig gespeicherten Nummernlisten PNL und PNL* können entweder vom mobilen Teilnehmer über die Teilnehmerselbsteingabe oder vom Netzbetreiber OP des IN-Netzes bzw. von dem Diensteanbieter SP intelligenter Dienste (durch ein entsprechendes intelligentes Peripheriegerät) über eine gesonderte Schnittstelle zur Vergebührungseinrichtung BC bzw. zur Verwaltungseinrichtung CCC verwaltet und gesteuert - d.h. auch geändert, ergänzt, gelöscht oder abgefragt - werden.

Über die Teilnehmerselbsteingabe können die Teilnehmerlisten PNL, PNL* vom mobilen Teilnehmer beeinflußt werden.

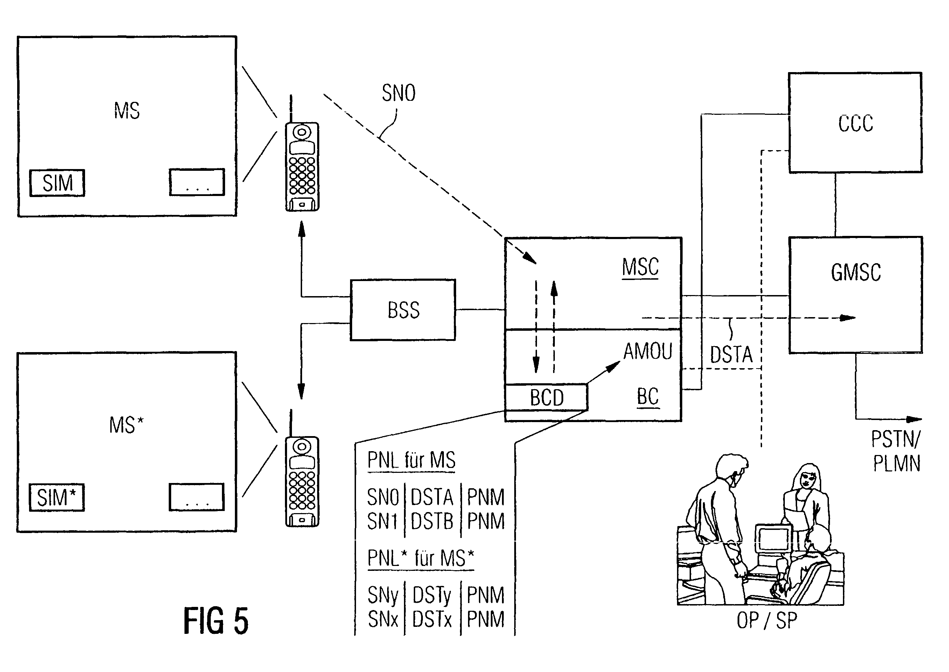

Das Blockschaltbild gemäß FIG 5 zeigt eine weitere Alternative zur netzseitigen Speicherung der Nummernlisten PNL und PNL* für die Mobilstationen MS und MS*. Der Speicherort ist eine Datenbasis BCD der Vergebührungseinrichtung BC. Der Anruf des A-Teilnehmers über die Mobilstation MS wird als gewöhnlicher abgehender Anruf behandelt, d.h. die gewählte Ziel-Rufnummer SN0 wird zum Netz signalisiert und von der Mobilvermittlungsstelle MSC ausgewertet. Erst in der Vergebührungseinrichtung BC wird anhand der in der Datenbasis BCD gespeicherten Nummernlisten einschließlich der Vorzugs-Rufnummern entschieden, ob eine abweichende Anrufbehandlung durchzuführen ist. Ein Vergleich der gespeicherten Ziel-Rufnummern in der oder den Listen PNL, PNL* mit der signalisierten Rufnummer ergibt das positive Resultat, sodaß wegen der vorliegenden Vorzugs-Rufnummer SN0 der andere Gebührentarif PTAR zur Ermittlung der gesamten Anrufgebühr AMOU verwendet wird. Auf Grund der empfangenen Ziel-Rufnummer SN0 wird die Anrufverbindung von der Mobilvermittlungsstelle MSC zum Anrufziel DSTA des leitungsgebundenen Teilnehmers aufgebaut. Die während einer Nachverarbeitung ausgelesenen, in der Vergebührungseinrichtung BC netzseitig gespeicherten Nummernlisten PNL und PNL* können vom Netzbetreiber OP bzw. Diensteanbieter SP über eine gesonderte Schnittstelle zur Vergebührungseinrichtung BC verwaltet und gesteuert - d.h. auch geändert, ergänzt, gelöscht oder abgefragt - werden. Über die Teilnehmerselbsteingabe können die Teilnehmerlisten PNL, PNL* vom mobilen Teilnehmer beeinflußt werden.

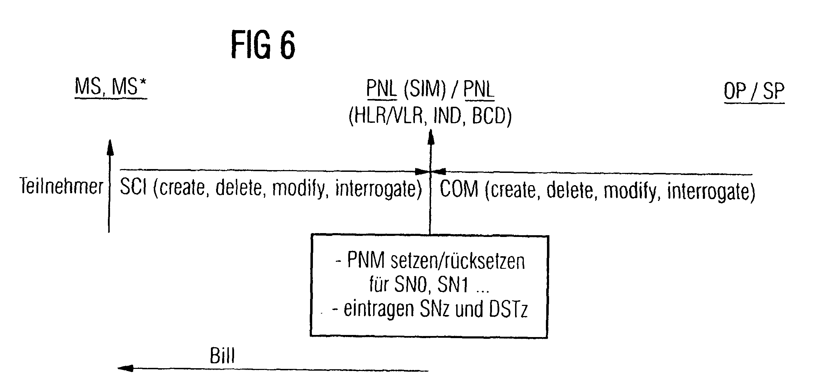

FIG 6 zeigt den Nachrichtenfluß zur Beeinflussung der Nummernliste PNL - stellvertretend auch für die Nummernliste PNL* - einerseits von Seiten der Mobilstationen MS und MS* durch den mobilen Teilnehmer selbst und andererseits von Seiten des Netzbetreibers OP bzw. Diensteanbieters SP. Liegen die Vorzugs-Rufnummern im Teilnehmeridentitätsmodul SIM, initiiert der Teilnehmer eine Teilnehmerselbsteingabe SCI, während netzseitig Befehle COM vom Netzbetreiber OP bzw. Diensteanbieter SP initiiert werden. Unabhängig, von welcher Einrichtung die Steuerung der gespeicherten Informationen in der Nummernliste erfolgt, enthalten die Teilnehmerselbsteingabe SCI und die Befehle COM eine Nachricht "create" zum Definieren/ Einrichten der Vorzugs-Rufnummern, eine Nachricht "delete" zum Löchen der Vorzugs-Rufnummern, eine Nachricht "modify" zum Verändern der Vorzugs-Rufnummern oder eine Nachricht "interrogate" zum Abfragen einzelner oder aller Vorzugs-Rufnummern. Auf Grund der mobilstationsseitig oder netzseitig empfangenen Steuernachrichten wird die Kennung PNM gesetzt/rückgesetzt, z.B. für die Vorzugs-Rufnummern SN0, SN1 oder eine neue Vorzugs-Rufnummer Snz, gegebenenfalls mit dem zugehörigen Anrufziel DSTz, zur bestehenden Liste PNL hinzugefügt. Für den Fall der Verwaltung und Steuerung durch den Teilnehmer selbst kann die Aktion auch eine netzseitig ermittelte Gebührenrechnung "Bill" zur Folge haben.

## Patentansprüche

1. Mobil-Kommunikationssystem zur Vergebührung von Anrufen, die von Mobilstationen (MS, MS*) mobiler Teilnehmer gesendet und empfangen werden können, in einem Mobilfunknetz mit einer aus Funkzellen aufgebauten zellularer Netzstruktur, das aufweist
- funktechnische Einrichtungen (BSS) zum Senden/Empfangen von Signalisierungs- und/oder Nutzinformationen zu/von den Mobilstationen (MS, MS*),
- vermittlungstechnische Einrichtungen (MSC) zum Durchschalten von Signalisierungs- und/oder Nutzverbindungen
- Speichereinrichtungen zum Speichern von Teilnehmerdaten der mobilen Teilnehmer,
- eine Vergebührungseinrichtung (BC) zum Aufzeichnen von anrufbezogenen Datensätzen und zum Ermitteln der jeweiligen Anrufgebühr abhängig von den Datensätzen,
**dadurch gekennzeichnet,**
- **daß** für die mobilen Teilnehmer jeweils eine oder mehrere Vorzugs-Rufnummern (SN0, SN1 ... SNx) definiert und verwaltet werden,
- **daß** eine mit dem Anruf gewählte Ziel-Rufnummer, der eine Steuerinformation (PNM) zur Kennzeichnung, dass es sich um eine Vorzugs-Rufnummer handelt, zugeordnet wird, mit den für den mobilen Teilnehmer definierten Vorzugs-Rufnummern (SN0, SN1 ... SNx) verglichen wird, und
- **daß** bei Identität der Ziel-Rufnummer mit einer Vorzugs-Rufnummer (SN0, SN1 ... SNx) die Anrufgebühren (AMOU) von der Vergebührungseinrichtung (BC) abweichend von der üblichen Vergebührung ermittelt werden.

2. Mobil-Kommunikationssystem nach Anspruch 1,
**dadurch gekennzeichnet,**
**daß** die Vorzugs-Rufnummern (SN0, SN1 ... SNx) mobilstationsseitig gespeichert werden.

3. Mobil-Kommunikationssystem nach Anspruch 2,
**dadurch gekennzeichnet,**
**daß** die Vorzugs-Rufnummern (SN0, SN1 ... SNx) in der Mobilstation (MS, MS*) oder in einem Teilnehmeridentitätsmodul (SIM) der Mobilstation (MS, MS*) gespeichert werden.

4. Mobil-Kommunikationssystem nach Anspruch 2 oder 3,
**dadurch gekennzeichnet,**
**daß** ein Speichereintrag zumindest aus der Vorzugs-Rufnummer (SN0, SN1 ... SNx) und einem zugehörigen Anrufziel (DSTA, DSTB ... DSTx) gebildet wird.

5. Mobil-Kommunikationssystem nach Anspruch 4,
**dadurch gekennzeichnet,**
**daß** der Speichereintrag einen Kurzcode zur Kennzeichnung der Vorzugs-Rufnummer (SN0, SN1 ... Snx) sowie den Namen des angerufenen Teilnehmers als Anrufziel (DSTA, DSTB ... DSTx) enthält.

6. Mobil-Kommunikationssystem nach einem der Ansprüche 2 bis 5,
**dadurch gekennzeichnet,**
**daß** die Steuerinformation (PNM) zur Kennzeichnung des Vorliegens einer Vorzugs-Rufnummer (SN0, SN1 ... Snx) zusammen mit der Ziel-Rufnummer von der Mobilstation (MS) zum Mobilfunknetz signalisiert wird, in dem auf Grund der empfangenen Informationen eine teilnehmerindividuelle Vergebührung des Anrufs veranlaßt wird.

7. Mobil-Kommunikationssystem nach Anspruch 6,
**dadurch gekennzeichnet,**
**daß** Informationen (AOC), die zumindest auf die teilnehmerindividuelle Vergebührung des Anrufs hinweisen, vom Mobilfunknetz bereitgestellt, zur Mobilstation (MS, MS*) signalisiert und von der Mobilstation (MS, MS*) dem mobilen Teilnehmer angezeigt werden.

8. Mobil-Kommunikationssystem nach Anspruch 6 oder 7,
**dadurch gekennzeichnet,**
**daß** die Information (PNM) zur Kennzeichnung des Vorliegens einer Vorzugs-Rufnummer (SN0, SN1 ... Snx) zur Mobilstation (MS, MS*) signalisiert und angezeigt wird.

9. Mobil-Kommunikationssystem nach Anspruch 1,
**dadurch gekennzeichnet,**
**daß** die Vorzugs-Rufnummern (SN0, SN1 ... SNx) netzseitig gespeichert werden.

10. Mobil-Kommunikationssystem nach Anspruch 9,
**dadurch gekennzeichnet,**
**daß** die Vorzugs-Rufnummern (SN0, SN1 ... SNx) in zumindest einer Teilnehmerdatenbasis (HLR, VLR) des Mobilfunknetzes als Teilnehmerdaten für den jeweiligen Teilnehmer gespeichert werden.

11. Mobil-Kommunikationssystem nach Anspruch 9,
**dadurch gekennzeichnet,**
**daß** die Vorzugs-Rufnummern (SN0, SN1 ... SNx) in zumindest einer Teilnehmerdatenbasis (IND) einer Dienstesteuerungsstelle (SCP) eines Intelligenten Netzes für den jeweiligen Teilnehmer gespeichert werden.

12. Mobil-Kommunikationssystem nach Anspruch 10 oder 11,
**dadurch gekennzeichnet,**
**daß** die als Teilnehmerdaten eingetragenen Vorzugs-Rufnummern (SN0, SN1 ... SNx) vom Netzbetreiber (OP) des Mobilfunknetzes oder die in der Dienstesteuerungsstelle (SCP) gespeicherten Vorzugs-Rufnummern (SN0, SN1 ... SNx) vom Netzbetreiber (OP) des Intelligenten Netzes verwaltet werden.

13. Mobil-Kommunikationssystem nach einem der Ansprüche 9 bis 11,
**dadurch gekennzeichnet,**
**daß** die Vorzugs-Rufnummern (SN0, SN1 ... SNx) von der Mobilstation (MS, MS*) über eine Teilnehmerselbsteingabe (SCI) des Teilnehmers verwaltet werden.

14. Mobil-Kommunikationssystem nach Anspruch 13,
**dadurch gekennzeichnet,**
**daß** die Teilnehmerselbsteingabe (SCI) zur Verwaltung der Vorzugs-Rufnummern (SN0, SN1 ... Snx) dem Teilnehmer gesondert vergebührt wird.

15. Mobil-Kommunikationssystem nach Anspruch 1,
**dadurch gekennzeichnet,**
**daß** die Vorzugs-Rufnummern (SN0, SN1 ... SNx) netzseitig in der Vergebührungseinrichtung (BC) gespeichert und erst bei Verknüpfung der Datensätze zum Ermitteln der Anrufgebühr das Vorliegen einer Vorzugs-Rufnummer (SN0, SN1 ... SNx) berücksichtigt werden.

16. Mobil-Kommunikationssystem nach einem der Ansprüche 9 bis 15,
**dadurch gekennzeichnet,**
**daß** die Vorzugs-Rufnummern (SN0, SN1 ... SNx) über Signalisierungsnachrichten, die ein Hinzufügen neuer Vorzugs-Rufnummern, ein Entfernen gespeicherter Vorzugs-Rufnummern, ein Modifizieren gespeicherter Vorzugs-Rufnummern und/oder ein Abfragen der gespeicherten Vorzugs-Rufnummern bewirken, verwaltet werden.

17. Mobilstation (MS, MS*) zum Senden und Empfangen von Anrufen mobiler Teilnehmer eines aus Funkzellen aufgebauten Mobilfunketzes mit zellularer Netzstruktur, das aufweist
- funktechnische Einrichtungen (BSS) zum Senden/Empfangen von Signalisierungs- und/oder Nutzinformationen zu/von den Mobilstationen (MS),
- vermittlungstechnische Einrichtungen (MSC) zum Durchschalten von Signalisierungs- und/oder Nutzverbindungen
- Speichereinrichtungen zum Speichern von Teilnehmerdaten der mobilen Teilnehmer,
- eine Vergebührungseinrichtung (BC) zum Aufzeichnen von anrufbezogenen Datensätzen und zum Ermitteln der jeweiligen Anrufgebühr abhängig von den Datensätzen,
**dadurch gekennzeichnet,**
- **daß** die Mobilstation (MS, MS*) Mittel (ADM) zum Definieren und Verwalten jeweils einer oder mehrerer Vorzugs-Rufnummern (SN0, SN1 ... SNx) für die mobilen Teilnehmer aufweist,
- **daß** die Mobilstation (MS, MS*) Mittel (COM) zum Vergleich einer mit dem Anruf gewählten Ziel-Rufnummer, der eine Steuerinformation (PNM) zur Kennzeichnung, dass es sich um eine Vorzugs-Rufnummer handelt, zugeordnet ist, mit den für den mobilen Teilnehmer definierten Vorzugs-Rufnummern (SN0, SN1 ... SNx) aufweist, und
- **daß** die Mobilstation (MS, MS*) Mittel (TRX) aufweist, die bei Identität der Ziel-Rufnummer mit einer Vorzugs-Rufnummer (SN0, SN1 ... SNx) eine Information zur Kennzeichnung des Vorliegens einer Vorzugs-Rufnummer (SN0, SN1 ... Snx) zusammen mit der Ziel-Rufnummer zum Mobilfunknetz signalisiert, wobei in dem Mobilfunknetz dem auf Grund der empfangenen Informationen die Anrufgebühren (AMOU) von der Vergebührungseinrichtung (BC) abweichend von der üblichen Vergebührung ermittelt werden.

18. Mobilstation nach Anspruch 17,
**dadurch gekennzeichnet,**
**daß** die Vorzugs-Rufnummern (SN0, SN1 ... SNx) in der Mobilstation (MS, MS*) oder in einem Teilnehmeridentitätsmodul (SIM) der Mobilstation (MS) gespeichert sind.

19. Mobilstation nach Anspruch 17 oder 18,
**dadurch gekennzeichnet,**
**daß** ein Speichereintrag aus der Vorzugs-Rufnummer (SN0, SN1 ... SNx) und zumindest einem zugehörigen Anrufziel (DSTA, DSTB ... DSTx) gebildet ist.

20. Mobilstation nach Anspruch 19,
**dadurch gekennzeichnet,**
**daß** der Speichereintrag einen Kurzcode zur Kennzeichnung der Vorzugs-Rufnummer (SN0, SN1 ... Snx) sowie den Namen des angerufenen Teilnehmers als Anrufziel (DSTA, DSTB ... DSTx) enthält.

21. Mobilstation nach einem der Ansprüche 17 bis 20,
**dadurch gekennzeichnet,**
**daß** die Steuerinformation (PNM) zur Kennzeichnung des Vorliegens einer Vorzugs-Rufnummer (SN0, SN1 ... Snx) zusammen mit der Ziel-Rufnummer zum Mobilfunknetz signalisiert wird, in dem auf Grund der empfangenen Informationen eine teilnehmerindividuelle Vergebührung des Anrufs veranlaßt wird.

22. Mobilstation nach einem der Ansprüche 17 bis 21,
**dadurch gekennzeichnet,**
**daß** Informationen (AOC, PNM), die zumindest auf die teilnehmerindividuelle Vergebührung des Anrufs hinweisen, vom Mobilfunknetz empfangen und von der Mobilstation (MS, MS*) über optische und/oder akustische Mittel angezeigt und/oder mitgeteilt werden.

## Claims

1. Mobile communication system for billing of calls which are sent by mobile stations (MS, MS*) of mobile subscribers and can be received in a Mobile Communications Network with a cellular network structure made up of radio cells, which features
- base station systems (BSS) for sending/receiving of signalling and/or payload information to/from the mobile stations (MS, MS*),
- Mobile Switching Centres (MSC) for through switching of signalling and/or payload connections
- Memory devices for storage of subscriber data of the mobile subscribers,
- A Billing Centre (BC) for recording call-related records and for determining the relevant call charge depending on the records
**characterized in that**
- for the mobile subscriber one or more preferred call numbers (SN0, SN1 ... SNx) is defined and administered in each case,
- a destination call number dialled with a call to which control information (PNM) to indicate that this number is a preferred call number, is assigned, is compared with preferred call numbers (SN0, SN1 ... SNx) defined for the mobile subscribers, and
- if the destination call number is identical to a preferred call number (SN0, SN1 ... SNx) the charge amount (AMOU) is determined by the Billing Centre (BC) in a different way from a normal call billing.

2. Mobile communication system in accordance with Claim 1,
**characterized in that**
the preferred call numbers (SN0, SN1 ... SNx) are stored on the mobile station side.

3. Mobile communication system in accordance with Claim 2,
**characterized in that**
the preferred call numbers (SN0, SN1 ... SNx) are stored in the mobile station (MS, MS*) or in a Subscriber Identity Module (SIM) of the mobile station (MS, MS*).

4. Mobile communication system in accordance with Claim 2 or 3,
**characterized in that**
a memory entry is formed from at least the preferred call number (SN0, SN1 ... SNx) and an associated called destination (DSTA, DSTB ... DSTx).

5. Mobile communication system in accordance with Claim 4,
**characterized in that**
the memory contains an abbreviated code to identify the preferred call numbers (SN0, SN1 ... Snx) as well as the names of the called subscriber as call destination (DSTA, DSTB ... DSTx).

6. Mobile communication system in accordance with one of the Claims 2 to 5
**characterized in that**
the control information (PNM) to indicate the presence of a preferred call number (SN0, SN1 ... Snx) is signalled together with the destination number of the mobile station (MS) to the Mobile Communications Network in which, as result of the information received, subscriber-individual charging of the call is initiated.

7. Mobile communication system in accordance with Claim 6,
**characterized in that**
information (AOC) which at least refers to the subscriber-individual charging of the call, provided by the Mobile Communications Network, is signalled to the mobile station (MS, MS*)
and is displayed by the mobile station (MS; MS*) to the mobile subscriber

8. Mobile communication system in accordance with Claim 6 or 7,
**characterized in that**
the information (PNM) to identify the presence of a preferred call number (SN0, SN1 ... Snx) is signalled and displayed to the mobile station (MS, MS*).

9. Mobile communication system in accordance with Claim 1,
**characterized in that**
the preferred call numbers (SN0, SN1 ... SNx) are stored on the network side.

10. Mobile communication system in accordance with Claim 9,
**characterized in that**
the preferred call numbers (SN0, SN1 ... SNx) are stored in at least one subscriber database (HLR, VLR) of the Mobile Communications Network as subscriber data for the relevant subscriber.

11. Mobile communication system in accordance with Claim 9,
**characterized in that**
the preferred call numbers (SN0, SN1 ... SNx) are stored in at least one subscriber database (IND) of a Service Control Point (SCP) of an intelligent network for the relevant subscribers.

12. Mobile communication system in accordance with Claim 10 or 11,
**characterized in that**
the preferred call numbers entered as subscriber data (SN0, SN1 ... SNx) by the Network Operator (OP) of the Mobile Communications Network or the preferred call numbers (SN0, SN1 ... SNx) stored in the Service Control Point (SCP) are administered by the Network Operator (OP) of the intelligent network.

13. Mobile communications system in accordance with one of the Claims 9 to 11,
**characterized in that**
the preferred call numbers (SN0, SN1 ... SNx) are administered from the mobile station (MS, MS*) via subscriber controlled inputs (SCI) by the subscriber.

14. Mobile communication system in accordance with Claim 13,
**characterized in that**
the subscriber controlled input (SCI) to administer the preferred call numbers (SN0, SN1 ... Snx) are charged separately to the subscriber.

15. Mobile communication system in accordance with Claim 1,
**characterized in that**
the preferred call numbers (SN0, SN1 ... SNx) are stored on the network-side in the charging unit (BC) and only on linkage of the data records to determine the call charges is the presence of a preferred call number (SN0, SN1 ... SNx) taken into account.

16. Mobile communication system in accordance with one of the Claims 9 to 15,
**characterized in that**
the preferred call numbers (SN0, SN1 ... SNx) are administered via signalling messages which cause new preferred call numbers to be added, stored preferred call numbers to be deleted, modified and/or interrogated.

17. Mobile station (MS, MS*) for sending and receiving calls of mobile subscribers of a mobile radio network made up of radio cells with a cellular network structure, which features
- Base station systems (BSS) for sending/receiving of signalling and/or payload information to/from the mobile stations (MS),
- Mobile Switching Centres (MSC) for through switching of signalling and/or payload connections
- Memory devices for storage of subscriber data of the mobile subscribers,
- A Billing Centre (BC) for recording call-related records and for determining the relevant call charge depending on the records,
**characterized in that**,
- the mobile station (MS, MS*) features means (ADM) for definition and administration of one or more preferred call numbers (SN0, SN1 ... SNx) for the mobile subscribers in each case
- the mobile station (MS, MS*) features means (COM) for comparison of a destination call number dialled with the call, to which control information (PNM) to identify that the number concerned as a preferred number is assigned, with the preferred call numbers defined for the mobile subscribers (SN0, SN1 ... SNx), and
- the mobile station (MS, MS*) features means (TRX) which, if the destination call number is identical to a preferred call number (SN0, SN1 ... SNx) signals information to identify the presence of a preferred call number (SN0, SN1 ... Snx) together with the destination call number to the Mobile Communications Network, in which case in the Mobile Communications Network, on the basis of the information received (AMOU) the call charges will be determined by the Billing Centre (BC) differently from normal charging.

18. Mobile station in accordance with Claim 17,
**characterized in that**
the preferred call numbers (SN0, SN1 ... SNx) are stored in the mobile station (MS, MS*) or in a Subscriber Identity Module (SIM) of the mobile station (MS).

19. Mobile station in accordance with Claim 17 or 18,
**characterized in that**
a memory entry is formed from the preferred call number (SN0, SN1 ... SNx) and at least one associated call destination (DSTA, DSTB ... DSTx).

20. Mobile station in accordance with Claim 19,
**characterized in that**
the memory entry contains an abbreviated code to identify the preferred call number (SN0, SN1 ... Snx) as well as the name of the called subscriber as call destination (DSTA, DSTB ... DSTx).

21. Mobile station in accordance with one of the Claims 17 to 20,
**characterized in that**
the control information (PNM) to indicate the presence of a preferred call number (SN0, SN1 ... Snx) is signalled together with the destination number to the Mobile Communications Network, in which, as a result of the information received, a subscriber-individual charging of the call is initiated.

22. Mobile station in accordance with one of the Claims 17 to 21,
**characterized in that**
information (AOC, PNM), which references at least the subscriber-individual charging of the call, is received by the Mobile Communications Network and is displayed and/or notified by the mobile station (MS, MS*) using visual and/or audible means.

## Revendications

1. Système de communication mobile pour la tarification de communications pouvant être envoyées ou reçues par des stations mobiles (MS, MS*) d'abonnés mobiles, dans un réseau de téléphonie mobile ayant la structure de réseau cellulaire formée par des cellules radio, le système comprenant
- des installations radiotechniques (BSS) pour émettre/recevoir des informations de signalisation et/ou des informations d'utilisation allant vers ou venant des stations mobiles (MS, MS*), respectivement;
- des installations orientées vers la commutation (MSC) pour établir des connexions de signalisation ou d'utilisation,
- des installations de mémoire pour enregistrer des données d'abonné des abonnés mobiles,
- une installation de tarification (BC) pour mémoriser des enregistrements relatifs aux communications et pour déterminer la taxe respective en fonction des enregistrements,
**caractérisé en ce**
- **qu'**un ou plusieurs numéros d'appel préférentiels (SN0, SN1, ... SNx) pour les abonnés mobiles sont définis et gérés;
- **qu'**un numéro de destination, composé pour l'appel, auquel une information de commande (PNM) est attribuée pour marquer qu'il s'agit d'un numéro préférentiel, est comparé aux numéros préférentiels (SN0, SN1, ... SNx) définis pour l'abonné mobile, et
- **que**, lors de l'identité du numéro de destination avec un numéro préférentiel (SN0, SN1, ... SNx), les taxes de communication (AMOU) sont déterminées par l'installation de tarification (BC) de manière différente par rapport à la tarification usuelle.

2. Système de communication mobile selon la revendication 1, **caractérisé en ce que** les numéros d'appel préférentiels ((SN0, SN1, ... SNx) sont enregistrés côté station mobile.

3. Système de communication mobile selon la revendication 2, **caractérisé en ce que** les numéros d'appel préférentiels (SN0, SN1, ... SNx) sont enregistrés dans la station mobile (MS, MS*) ou dans un module d'identification de l'abonné (SIM) de la station mobile (MS, MS*).

4. Système de communication mobile selon la revendication 2 ou 3, **caractérisé en ce qu'**une entrée de mémoire est formée au moins du numéro d'appel préférentiel (SN0, SN1, ... SNx) et d'une destination d'appel associée (DSTA, DSTB, ... DSTx).

5. Système de communication mobile selon la revendication 4, **caractérisé en ce que** l'entrée de mémoire contient un code abrégé pour l'identification du numéro d'appel préférentiel (SN0, SN1, ... SNx) ainsi que le nom de l'abonné appelé à titre de destination de l'appel (DSTA. DSTB, ... DSTx).

6. Système de communication mobile selon l'une des revendications 2 à 5, **caractérisé en ce que** l'information de commande (PNM) pour l'identification de la présence d'un numéro d'appel préférentiel (SN0, SN1, ... SNx) est signalée conjointement au numéro d'appel de destination par la station mobile (MS) au réseau de téléphonie mobile dans lequel une tarification individuelle pour l'abonné est causée sur la base des informations reçues.

7. Système de communication mobile selon la revendication 6, **caractérisé en ce que** des informations (AOC) qui indiquent au moins la tarification individuelle de l'abonné sont mises à disposition par le réseau de téléphonie mobile, sont signalées à la station mobile (MS, MS*) et affichées à l'abonné mobile par la station mobile (MS, MS*).

8. Système de communication mobile selon la revendication 6 ou 7, **caractérisé en ce que** l'information (PNM) pour l'indication de la présence d'un numéro d'appel préférentiel (SN0, SN1, ... SNx) est signalée à la station mobile (MS, MS*) et y affichée.

9. Système de communication mobile selon la revendication 1, **caractérisé en ce que** les numéros d'appel préférentiels (SN0, SN1, ... SNx) sont enregistrés côté réseau.

10. Système de communication mobile selon la revendication 9, **caractérisé en ce que** les numéros d'appel préférentiels (SN0, SN1, ... SNx) sont enregistrés dans au moins une base de données d'abonné (HLR, VLR) du réseau de téléphonie mobile à titre de données d'abonné pour l'abonné considéré.

11. Système de communication mobile selon la revendication 9, **caractérisé en ce que** les numéros d'appel préférentiels (SN0, SN1, ... SNx) sont enregistrés pour l'abonné considéré dans au moins une base de données d'abonné (IND) d'un central de traitement de services (SCP) d'un Réseau Intelligent.

12. Système de communication mobile selon la revendication 10 ou 11, **caractérisé en ce que** les numéros d'appel préférentiels (SN0, SN1, ... SNx) enregistrés comme données d'abonné sont gérés par le prestataire de réseau (OP) du réseau de téléphonie mobile, ou bien les numéros d'appel préférentiels (SN0, SN1, ... SNx) enregistrés dans le central de traitement des services (SCP) sont gérés par le prestataire de réseau (OP) du Réseau Intelligent.

13. Système de communication mobile selon l'une des revendications 9 à 12, **caractérisé en ce que** les numéros d'appel préférentiels (SN0, SN1, ... SNx) sont gérés par la station mobile (MS, MS*) à l'aide d'une entrée directe d'abonné (SCI) de l'abonné.

14. Système de communication mobile selon la revendication 13, **caractérisé en ce que** l'entrée directe d'abonné (SCI) pour la gestion des numéros d'appel préférentiels (SN0, SN1, ... SNx) est tarifée séparément à l'abonné.

15. Système de communication mobile selon la revendication 1, **caractérisé en ce que** les numéros d'appel préférentiels (SN0, SN1, ... SNx) sont enregistrés côté réseau dans l'installation de tarification (BC), et que l'existence d'un numéro d'appel préférentiel (SN0, SN1, ... SNx) n'est considérée que lors de la liaison des enregistrements de données pour déterminer la taxe de communication.

16. Système de communication mobile selon l'une des revendications 9 à 15, **caractérisé en ce que** les numéros d'appel préférentiels (SN0, SN1, ... SNx) sont gérés par l'intermédiaire de messages de signalisation qui effectuent l'ajout de nouveaux numéros d'appel préférentiels, l'effacement de numéros d'appel préférentiels enregistrés, la modification de numéros d'appel préférentiels enregistrés et/ou une consultation de numéros d'appel préférentiels enregistrés.

17. Station mobile (MS, MS*) pour émettre et recevoir des appels d'abonnés mobiles d'un réseau de téléphonie mobile composé de cellules radio et ayant une structure de réseau cellulaire, comportant
- des installations radiotechniques (BSS) pour émettre/recevoir des informations de signalisation et/ou des informations d'utilisation allant vers ou venant des stations mobiles (MS), respectivement;
- des installations orientées vers la commutation (MSC) pour établir des connexions de signalisation ou d'utilisation,
- des installations de mémoire pour enregistrer des données d'abonné des abonnés mobiles,
- une installation de tarification (BC) pour mémoriser des enregistrements relatifs aux communications et pour déterminer la taxe de communication respective en fonction des enregistrements,
**caractérisée en ce**
- **que** la station mobile (MS, MS*) comprend des moyens (ADM) pour définir et gérer un ou plusieurs numéros d'appel préférentiels pour l'abonné mobile,
- **que** la station mobile (MS, MS*) comprend des moyens (COM) pour comparer un numéro d'appel de destination, composé pour une communication, auquel une information de commande (PNM) est attribuée pour marquer qu'il s'agit d'un numéro d'appel préférentiel, avec les numéros d'appel préférentiels (SN0, SN1, ... SNx) définis pour l'abonné, et
- **que** la station mobile (MS, MS*) comprend des moyens (TRX) qui, lors de l'identité entre le numéro d'appel de destination et un numéro d'appel préférentiel (SN0, SN1, ... SNx), signale au réseau de téléphonie mobile une information pour marquer l'existence d'un numéro d'appel préférentiel (SN0, SN1, ... SNx) conjointement au numéro d'appel de destination, les taxes de la communication (AMOU) étant déterminées dans le réseau de téléphonie mobile par l'installation de tarification (BC) sur la base des informations reçues de manière différente par rapport à la tarification usuelle.

18. Station mobile selon la revendication 17, **caractérisée en ce que** les numéros d'appel préférentiels (SN0, SN1, ... SNx) sont enregistrés dans la station mobile (MS, MS*) ou dans un module d'identité de l'abonné dans la station mobile (MS).

19. Station mobile selon la revendication 17 ou 18, **caractérisée en ce qu'**une entrée de mémoire est formée par le numéro d'appel préférentiel (SN0, SN1, ... SNx) et au moins une destination d'appel (DSTA, DSTB ... DSTx) y associée.

20. Station mobile selon la revendication 19, **caractérisée en ce que** l'entrée de mémoire contient un code raccourci pour caractériser le numéro d'appel préférentiel (SN0, SN1, ... SNx) ainsi que le nom de l'abonné appelé à titre de destination (DSTA, DSTB ... DSTx).

21. Station mobile selon l'une des revendications 17 à 20, **caractérisée en ce que** l'information de commande (direction) (PNM) pour marquer l'existence d'un numéro d'appel préférentiel (SN0, SN1, ... SNx) est signalée conjointement au numéro d'appel de destination au réseau de téléphonie mobile dans lequel une tarification individuelle pour l'abonné est effectuée basée sur les informations reçues.

22. Station mobile selon l'une des revendications 17 à 21, **caractérisée en ce que** des informations (AOC, PNM) qui se réfèrent au moins à la tarification individuelle pour l'abonné de la communication sont reçues par le réseau de téléphonie mobile et sont affichées et/ou communiquées par la station mobile (MS, MS*) à l'aide des moyens optiques et/ou acoustiques.
